# EUROPÄISCHE PATENTANMELDUNG

(11) **EP 1 895 405 A1**
(43) Veröffentlichungstag der Anmeldung: **05.03.2008**
(21) Anmeldenummer: 07121633.7
(22) Anmeldetag: 07.08.2004
(51) Int. Cl.: G06F 9/38, G06F 11/16

(54) **VERFAHREN UND VORRICHTUNG ZUR OPERANDENVERARBEITUNG IN EINER PROZESSOREINHEIT**

(30) Priorität: 24.10.2003 DE 10349580
(62) Teilanmeldung aus: 04762624.7
(71) Anmelder: ROBERT BOSCH GMBH, 70442 Stuttgart (DE)
(72) Erfinder: Weiberle, Reinhard, 71665, Vaihingen/Enz (DE); Kottke, Thomas, 71139, Ehningen (DE); Steininger, Andreas, 1230, Wien (AT)

(57) **Zusammenfassung**

Verfahren und Vorrichtung zur Operandenverarbeitung in einer Prozessoreinheit mit wenigstens zwei Ausführungseinheiten, welche in einem vorgebbaren Takt betreibbar sind, wobei die Ausführungseinheiten mit Steuersignalen zur Verarbeitung der Operanden angesteuert werden und zwischen einem ersten Betriebsmodus und einem zweiten Betriebsmodus umgeschaltet werden kann, dadurch gekennzeichnet, dass in dem ersten Betriebsmodus beiden Ausführungseinheiten gleiche Operanden zugeführt werden und in dem zweiten Betriebsmodus beiden Ausführungseinheiten unterschiedliche Operanden zugeführt werden und in dem ersten Betriebsmodus beide Ausführungseinheiten mit gleichen Steuersignalen zur Verarbeitung der Operanden angesteuert werden und im zweiten Betriebsmodus beide Ausführungseinheiten mit unterschiedlichen Steuersignalen zur Verarbeitung der Operanden angesteuert werden. Die Operanden oder aus den Operanden abgeleitete Daten, wie zum Beispiel daraus gebildete ECC Codes werden auf Übereinstimmung durch Vergleicher bzw. Comparatoren verglichen. Weiterhin werden bei der Verarbeitung der Operanden entstehende Zustände, wie zum Beispiel abgeleitete Daten in Form von ECC Codes, oder Ergebnisse durch Vergleicher auf Übereinstimmung verglichen. Bei dem Vergleich wird festgelegt, welche Operanden, Daten, Zustände oder Ergebnisse verglichen werden.

## Beschreibung

### Stand der Technik

Die Erfindung geht aus von einem Verfahren und einer Vorrichtung zur Operandenverarbeitung in einer Prozessoreinheit mit wenigstens zwei Ausführungseinheiten und einer Umschaltung zwischen wenigstens zwei Betriebsmodi sowie entsprechender Prozessoreinheit gemäß den Oberbegriffen der unabhängigen Ansprüche.

Solche Prozessoreinheiten mit wenigstens zwei integrierten Ausführungseinheiten sind auch als Dual-Core- oder Multi-Core-Architekturen bekannt. Solche Dual-Core- oder Multi-Core-Architekturen werden nach heutigem Stand der Technik hauptsächlich aus zwei Gründen vorgeschlagen:

Zum Einen kann damit eine Leistungssteigerung, also eine Performance-Steigerung erreicht werden, indem die beiden Ausführungseinheiten oder Cores als zwei Recheneinheiten auf einem Halbleiterbaustein betrachtet und behandelt werden. In dieser Konfiguration bearbeiten die zwei Ausführungseinheiten oder Cores unterschiedliche Programme respektive Tasks. Dadurch lässt sich eine Leistungssteigerung erzielen, weshalb diese Konfiguration als Leistungsmodus oder Performance-Mode bezeichnet wird.

Neben dem Einsatz als superskalare Prozessoren ist der zweite Grund eine Dual-Core- oder Multi-Core-Architektur zu realisieren, die Steigerung der Sicherheit, indem beide Ausführungseinheiten redundant das gleiche Programm abarbeiten. Die Ergebnisse der beiden Ausführungseinheiten werden verglichen, und ein Fehler kann dann bei dem Vergleich auf Übereinstimmung erkannt werden. Im Folgenden wird diese Konfiguration als Sicherheitsmodus oder safety-mode bezeichnet.

Im Allgemeinen sind die beiden genannten Konfigurationen exklusiv auf der Dual- oder Multi-Core-Architektur enthalten, d. h. der Rechner mit den wenigstens zwei Ausführungseinheiten wird prinzipiell nur in einem Modus betrieben: Entweder dem Performance-Modus oder dem Safety-Modus.

Aufgabe der Erfindung ist es nun, einen kombinierten Betrieb einer solchen Dual-oder Multi-Core-Prozessoreinheit bezüglich wenigstens zwei Betriebsarten so zu ermöglichen dass dabei eine optimale Umsetzung zwischen wenigstens zwei Betriebsmodi, also insbesondere zwischen Sicherheitsmodus und Leistungsmodus erzielbar ist.

### Vorteile der Erfindung

Es ist zum Einen aus Sicherheitsgründen eine redundante Verarbeitung der Operanden bzw. eine redundante Ausführung der Programme respektive Tasks, also auch von Aufgabenprogrammen, Programmteilen, Codeblöcken oder auch einzelnen Befehlen erwünscht, aber andererseits aus Kostengründen das Bereithalten von vollständig redundanter Hardware bei der Ausführung der nicht sicherheitskritischen Funktionen nicht erstrebenswert. Dieser Zielkonflikt wird erfindungsgemäß durch eine optimierte Umsetzung zwischen wenigstens zwei Betriebsmodi bei einer Prozessoreinheit gelöst.

So geht die Erfindung von einem Verfahren und einer Vorrichtung zur Operandenverarbeitung in einer Prozessoreinheit mit wenigstens zwei Ausführungseinheiten aus, welche in einem vorgebbaren Takt betreibbar sind, wobei die Ausführungseinheiten mit Steuersignalen zur Verarbeitung der Operanden angesteuert werden, wobei zwischen einem ersten Betriebsmodus und einem zweiten Betriebsmodus umgeschaltet werden kann, wobei vorteilhafter Weise in dem ersten Betriebsmodus beiden Ausführungseinheiten gleiche Operanden zugeführt werden und in dem zweiten Betriebsmodus beiden Ausführungseinheiten unterschiedliche Operanden zugeführt werden und in dem ersten Betriebsmodus beide Ausführungseinheiten mit gleichen Steuersignalen zur Verarbeitung der Operanden angesteuert werden und im zweiten Betriebsmodus beide Ausführungseinheiten mit unterschiedlichen Steuersignalen zur Verarbeitung der Operanden angesteuert werden.

Aus Sicherheitsgründen kann vorgesehen sein, dass die Operanden oder aus den Operanden abgeleitete Daten, wie zum Beispiel daraus gebildete ECC Codes auf Übereinstimmung durch Vergleicher bzw. Comparatoren verglichen werden, wobei bei Abweichungen ein Fehler erkannt wird. Ebenso können bei der Verarbeitung der Operanden entstehende Zustände, wie zum Beispiel abgeleitete Daten in Form von ECC Codes, oder Ergebnisse durch Vergleicher auf Übereinstimmung verglichen werden, wobei auch hier bei Abweichungen auf Fehler erkannt wird. In beiden Fällen kann bei dem Vergleich abhängig von Betriebsmodus festgelegt werden, ob ein solcher Vergleich durchgeführt wird oder welche Operanden, Daten, Zustände oder Ergebnisse verglichen werden.

Dabei wird vorteilhafterweise in dem ersten Betriebsmodus eine Zuführung der Operanden zu den Ausführungseinheiten in Abhängigkeit von dem Takt der Ausführungseinheiten als Volltakt durchgeführt und im zweiten Betriebsmodus erfolgt eine Zuführung der Operanden in einem im Vergleich zu dem Volltakt schnelleren zweiten Takt zur Verarbeitung.

Zweckmäßiger Weise wird dabei der Takt der Ausführungseinheiten und der Volltakt gleich gewählt, wobei in einer speziellen Ausgestaltung der schnellere zweite Takt im Vergleich zum Volltakt doppelt so schnell als Halbtakt ausgebildet ist.

Vorteilhafter Weise werden die Operanden in beiden Betriebsmodi synchron verarbeitet, wobei auch eine synchrone Verarbeitung der Operanden im ersten Betriebsmodus und eine asynchrone Verarbeitung der Operanden im zweiten Betriebsmodus denkbar ist.

Die Zustände oder Ergebnisse werden dann vor dem Schreiben auf einen Bus durch ein Freigabe-Signal freigegeben wobei dies abhängig von dem Betriebmodus und dem Vergleichsergebnis erfolgt, so dass die Zustände oder Ergebnisse entweder gleichzeitig oder nacheinander freigebbar sind.

Die erfindungsgemäße Vorrichtung bzw. Prozessoreinheit mit einer solchen Vorrichtung enthält dabei neben den wenigstens zwei Ausführungseinheiten, welche in einem vorgebbaren Takt betreibbar sind, ein Steuerwerk, insbesondere als Umschalteinrichtung, welches zwischen einem ersten Betriebsmodus und einem zweiten Betriebsmodus umschaltet und welches die Ausführungseinheiten mit Steuersignalen zur Verarbeitung der Operanden ansteuert und dieses Steuerwerk mit den Ausführungseinheiten und weiteren Zuführungseinheiten verbunden ist, wobei das Steuerwerk mit den Zuführungseinheiten derart zusammen wirkt, dass in dem ersten Betriebsmodus beiden Ausführungseinheiten gleiche Operanden zugeführt werden und in dem zweiten Betriebsmodus beiden Ausführungseinheiten unterschiedliche Operanden zugeführt werden, wobei das Steuerwerk derart ausgebildet ist, dass in dem ersten Betriebsmodus beide Ausführungseinheiten mit gleichen Steuersignalen zur Verarbeitung der Operanden angesteuert werden und im zweiten Betriebsmodus beide Ausführungseinheiten mit unterschiedlichen Steuersignalen zur Verarbeitung der Operanden angesteuert werden.

Dabei sind zweckmäßiger Weise das Steuerwerk und die Zuführungseinheiten so ausgebildet, dass in dem ersten Betriebsmodus eine Zuführung der Operanden zu den Ausführungseinheiten in Abhängigkeit von dem Takt der Ausführungseinheiten als Volltakt erfolgt und im zweiten Betriebsmodus eine Zuführung der Operanden in einem im Vergleich zu dem Volltakt schnelleren zweiten Takt zur Verarbeitung erfolgt.

Die beiden Ausführungseinheiten können dabei lediglich als Rechenwerke (A-LUs) oder auch als ganze Rechnerkerne (Cores) oder Verarbeitungseinheiten (CPUs) ausgebildet sein. Die Erfindung ist somit vorteilhafterweise auf alle wenigstens zweifach ausgeführten derartigen Komponenten zur Operandenverarbeitung als Ausführungseinheiten in einer Prozessoreinheit anwendbar.

Die Zuführungseinheiten sind als Registeranordnung derart gestaltet, dass wenigstens ein Operandenregister vorgesehen ist und zwischen Operandenregister und jeder Ausführungseinheit wenigstens ein Zwischenregister vorgesehen ist wobei die Zuführungseinheiten und die Ausführungseinheiten derart ausgestaltet sind, dass diese im zweiten Betriebsmodus, dem Leistungsmodus LM mit unterschiedlichen Takten arbeiten oder betrieben werden, insbesondere dass die Zuführungseinheiten derart ausgestaltet sind , dass diese im zweiten Betriebsmodus in einem schnelleren, insbesondere doppelt so schnellen Takt wie die Ausführungseinheiten arbeiten oder betrieben werden.

Vorteilhafterweise ist ein Decoder vorgesehen, durch welchen eine Umschaltbedingung erkennbar ist, wobei der Decoder mit dem gleichen Takt wie die Zuführungseinheit arbeitet oder betrieben wird.

Dabei sind zweckmäßiger Weise optional erste Schaltmittel vorgesehen, welche derart ausgestaltet oder betreibbar sind, dass diese die Zuführungsmittel abhängig von dem ersten oder zweiten Betriebsmodus schalten und/oder zweite Schaltmittel vorgesehen, welche derart ausgestaltet oder betreibbar sind, dass diese die Ausführungseinheiten abhängig von dem ersten oder zweiten Betriebsmodus schalten.

Zweckmäßiger Weise sind die Zuführungseinheiten und die Ausführungseinheiten derart ausgestaltet, dass diese im ersten Betriebsmodus, dem Sicherheitsmodus mit dem gleichen Takt und insbesondere synchron arbeiten oder betrieben werden.

Weitere Vorteile und vorteilhafte Ausgestaltungen ergeben sich aus der Beschreibung sowie den Merkmalen der Ansprüche.

### Zeichnung

Die Erfindung wird im weiteren anhand der in der Zeichnung dargestellten Figuren näher erläutert.

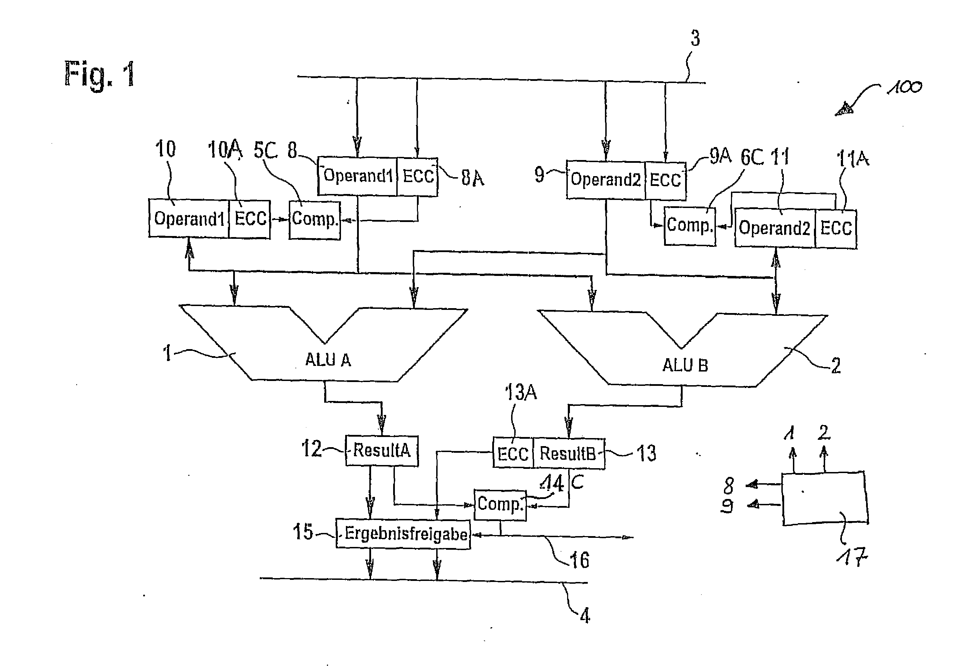

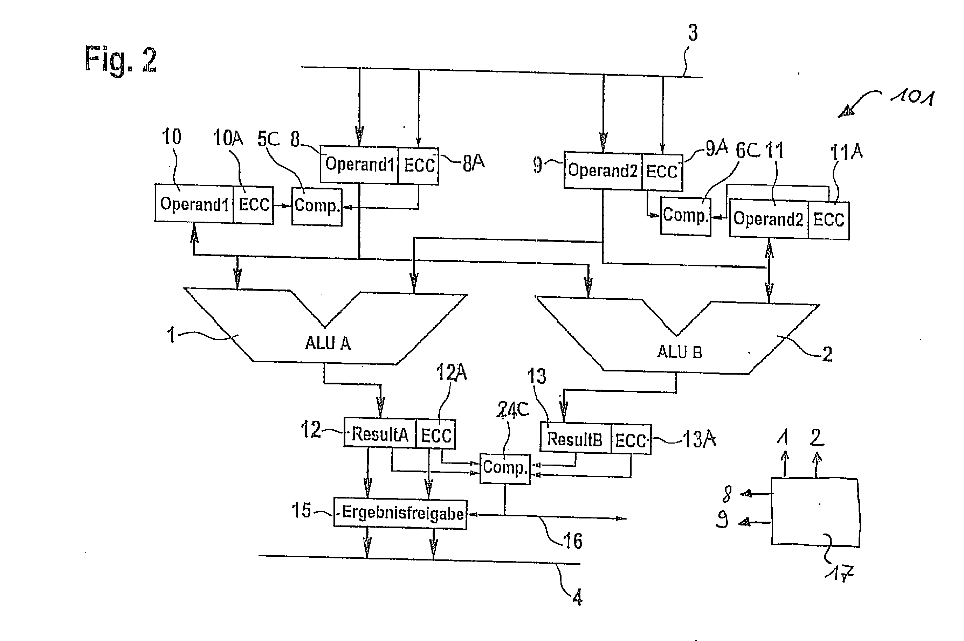

Dabei zeigen Figur 1 und Figur 2 jeweils eine Prozessoreinheit mit dupliziertem Rechenwerk und einer Operandenregisteranordnung mit jeweils einem Operandenregister und jeweils einem Zwischenregister.

Figur 3 zeigt ebenfalls eine solche Prozessoreinheit mit duplizierter Ausführungseinheit sowie einer zu Figur 1 und 2 unterschiedlichen Operandenregisteranordnung mit jeweils zwei Paaren von Operandenregistern und einer entsprechenden Zahl von Zwischenregistern.

Figur 4 zeigt unterschiedliche Takte für Zuführung und Verarbeitung der Operanden, insbesondere Halbtakt und Volltakt.

Figur 5 zeigt ebenfalls eine Prozessoreinheit mit duplizierter Ausführungseinheit, vergleichbar zu Figur 3, wobei den Ausführungseinheiten nur ein Operandeneingang zur Verfügung steht und in der Operandenregisteranordnung nur ein Operandenregister vorgesehen ist.

### Beschreibung der Ausführungsbeispiele

In den Figuren 1, 2, 3 und 5 der Zeichnung sind gleiche und/oder funktionsgleiche Elemente, sofern nichts anderes angegeben ist, mit gleichen Bezugszeichen versehen worden.

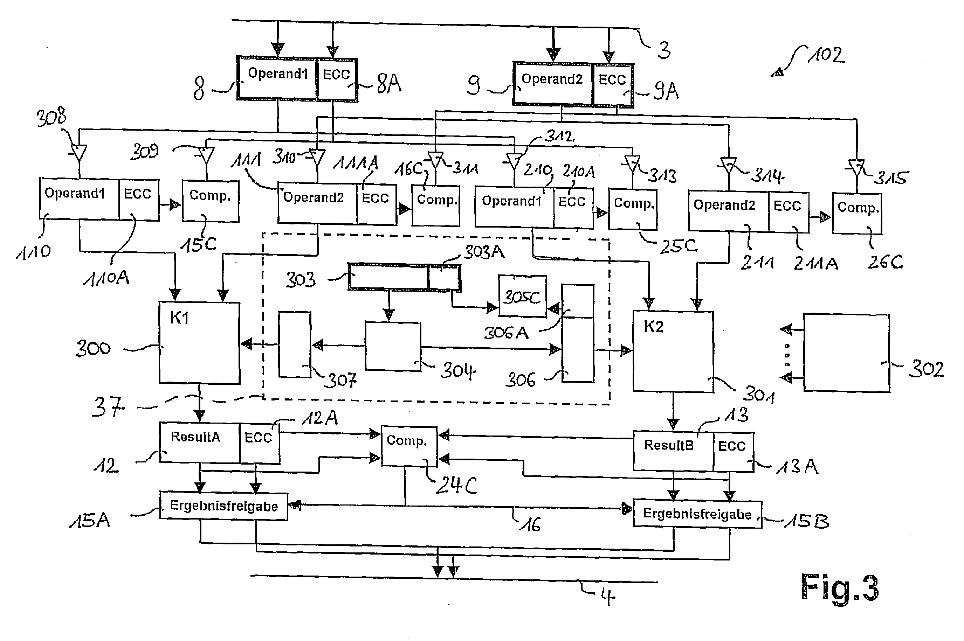

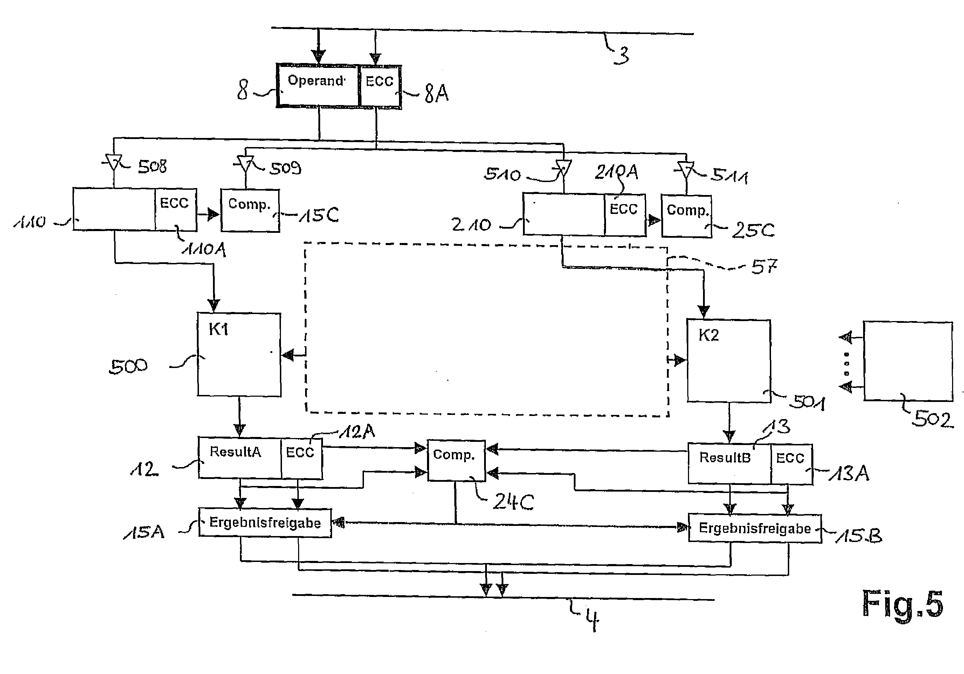

Die nicht direkt erfindungsgemäßen Komponenten der Prozessoreinheit, wie Speichereinheiten, Peripherieeinheiten, der Rest der Cores oder CPUs bei Rechenwerksdarstellung usw. sind der besseren Übersichtlichkeit halber in den Figuren 1 und 2 nicht direkt dargestellt worden. Allerdings können die beiden Rechenwerke ALU A und ALU B ebenso FPUs oder kompletten Cores respektive CPUs im Rahmen der Erfindung entsprechen, so dass die Erfindung auch für komplette Dual-Core-Architekturen Einsatz finden kann, wie dies noch in den Figuren 3 und 5 beschrieben wird. Bevorzugt in den Figuren 1 und 2 ist allerdings, dass nur das Rechenwerk dupliziert wird und die anderen Komponenten der CPU durch andere Fehlerentdeckungsmechanismen abgesichert werden.

In den Figuren 1 und 2 sind mit den Bezugszeichen 1 und 2 jeweils arithmetisch logische Einheiten (ALU: Arithmetic Logic Unit) oder auch Fließkommaeinheiten (FPU: Floating Point Unit) als Ausführungseinheiten bezeichnet. In diesem Ausführungsbeispiel ist nun das Rechenwerk (ALU) redundant ausgelegt. Eine jeweilige ALU-Einheit 1, 2 weist zwei Eingänge und einen Ausgang auf. In einem Testbetrieb können die zur Ausführung vorgesehenen Operanden direkt vom Bus 3 in die Eingänge der ALU-Einheiten 1, 2 eingekoppelt werden oder vorher in einem eigens dafür vorgesehenen Operandenregister 8, 9 abgelegt sein. Diese Operandenregister 8, 9 sind direkt mit dem Datenbus 3 gekoppelt. Die beiden ALU-Einheiten 1, 2 werden also aus den gleichen Operandenregistern 8, 9 versorgt. Zusätzlich kann vorgesehen sein, dass die jeweiligen Operanden über den Bus bereits mit einer ECC-Codierung versehen sind, welche in den Registerbereichen 8A, 9A abgelegt werden. D. h. an allen Stellen in den Figuren 1 und 2 (sowie in den Figuren 3 und 5 wie später erläutert), in denen ECC angegeben ist, können die Daten durch Einsatz eines ECC-Codes (Error Correction Code) abgesichert sein.

Solche Methoden zur Fehlererkennung sind vielfältig, wobei die Grundvoraussetzung die Absicherung mit einem Fehlererkennungs- bzw. Fehlerkorrekturcode, also mit einer Signatur darstellt. Im einfachsten Fall kann diese Signatur nur aus einem Signaturbit, beispielsweise einem Parity-Bit bestehen. Andererseits kann die Absicherung auch durch komplexere ED-Codes (Error Detection) wie einen Berger-Code oder einen Bose-Lin-Code usw. oder auch durch einen komplexeren ECC-Code wie beispielsweise einen Hamming-Code usw. realisiert werden, um durch entsprechende Bitzahl eine sichere Fehlererkennung zu ermöglichen. Es kann aber auch als Codegenerator, beispielsweise eine Generatortabelle (fest verdrahtet oder in Software) verwendet werden, um bestimmten Eingangsmustern der Bits im Rahmen der Adresse ein gewünschtes Codemuster beliebiger Länge zuzuordnen. Damit kann, insbesondere durch die Korrekturfunktion, die Datensicherheit gewährleistet werden. Dennoch erfolgt im sicherheitskritischen Modus, also im Sicherheitsmodus SM eine redundante Abarbeitung der sicherheitskritischen Programme in beiden Ausführungseinheiten, also hier in beiden ALUs 1 und 2, wodurch Fehler in diesen durch Vergleich auf Übereinstimmung erfindungsgemäß aufgedeckt werden. Im Weiteren wird zwischen den möglichen Fehlercodierungsmöglichkeiten nicht mehr unterschieden und generell die Bezeichnung ECC verwendet.

Die nicht sicherheitsrelevanten bzw. nichtsicherheitskritischen Programme oder Tasks respektive Programmteile oder Codeblöcke oder Befehle können zur Leistungserhöhung auf beiden Ausführungseinheiten verteilt berechnet werden, wodurch sich der Durchsatz und damit die Leistung erhöht. Dies erfolgt im sogenannten Leistungsmodus oder Performancemode LM.

Bei Einkopplung der jeweiligen Operanden in die ALU-Einheiten 1, 2 muss besonderer Wert auf die korrekte Dateneingabe gelegt werden. Werden z. B. die gleichen fehlerhaften Operanden in die beiden ALU-Einheiten 1, 2 eingekoppelt, ist ein Fehler am Ausgang der ALU-Einheiten 1, 2 nicht erkennbar. Es muss daher sichergestellt sein, dass zumindest eine der ALU-Einheiten 1 oder 2 einen korrekten Dateneingabewert erhält bzw. auch beide ALU-Einheiten 1, 2 unterschiedliche, jedoch falsche Dateneingabewerte erhalten. Dies wird dadurch sichergestellt, dass von zumindest einem Eingangswert einer ALU-Einheit 1, 2 eine Prüfsumme, also ein ECC-Code, wie oben erwähnt, gebildet wird. In einer eigens vorgesehenen Vergleichseinheit 5C, 6C wird die ECC-Codierung 10A, 11A aus diesen zusätzlichen Datenregistern oder Zwischenregistern 10, 11 mit der ECC-Codierung 8A, 9A aus dem ursprünglichen Quellregister 8, 9 verglichen. Optional können auch die Eingangsdaten aus den Registern 10, 11 mit denen aus den Quellregistern 8, 9 verglichen werden. Ergibt sich ein Unterschied in der ECC-Codierung bzw. bei den Operanden, dann wird dies als Fehler interpretiert und es wird ein Fehlersignal ausgegeben, unter Umständen angezeigt und unter Umständen korrigiert. Dieser Vergleich erfolgt vorteilhafter Weise während der Bearbeitung der Operanden in den ALU-Einheiten 1, 2, so dass diese eingangsseitige Fehlererkennung und Fehlerkorrektur nahezu ohne Leistungsverlust einhergeht. Erkennt eine der Vergleichseinheiten 5C, 6C einen Fehler, so kann die Berechnung innerhalb des nächsten Zyklus wiederholt werden. Dabei kann ein Schattenregister Einsatz finden, um immer die Operanden der letzten Berechnung zu sichern, damit sie in einem Fehlerfall schnell wieder verfügbar sind. Auf die Bereitstellung eines solchen Schattenregisters kann allerdings verzichtet werden, wenn die jeweiligen Zwischenregister 10, 11 erst wieder durch ein Freigabesignal aufgrund des Nichtvorhandenseins eines Fehlers erneut beschrieben werden. Im Falle eines Fehlers liefern die Vergleichseinheiten 5C, 6C ein Fehlersignal, wodurch die Zwischenregister 10, 11 nicht erneut beschrieben werden.

Die ALU-Einheiten 1, 2 erzeugen ausgangsseitig jeweils ein Ergebnis. Die von den ALU-Einheiten 1, 2 bereitgestellten Ergebnisdaten und/oder deren ECC-Codierung werden in den Ergebnisregistern 12, 13, 12A, 13A abgelegt. Diese Ergebnisdaten und/oder deren Codierung werden in der Vergleichseinheit 14C, 24C miteinander verglichen. Im Falle des Nichtvorhandenseins eines Fehlers wird ein Freigabesignal 16 erzeugt. Dieses Freigabesignal 16 wird in die Freigabeeinrichtung 15 eingekoppelt, welche dazu veranlasst wird, die Ergebnisdaten auf einen Bus 4 zu schreiben. Über den Bus 4 können diese Ergebnisdaten dann wieder verarbeitet werden.

Das Freigabesignal 16 kann ferner dazu genutzt werden, die Register 8 bis 11 wieder freizuschalten, so dass die nächsten Operanden vom Bus 3 ausgelesen werden können und in den ALU-Einheiten 1, 2 verarbeitet werden können.

Mit der Anordnung in Figur 1 wird das Ergebnis selbst nicht überprüft. Hier werden lediglich die Ergebnisdaten in der Vergleichseinheit 14C miteinander verglichen. Eine Überprüfung der ECC-Codierung der Ergebnisdaten wird erst durch die Anordnung in Figur 2 möglich, bei der sowohl die Ergebnisdaten als auch deren ECC-Codierung miteinander in der Vergleichseinheit 24C verglichen werden.

Mit den in den Figuren 1 und 2 angegebenen Fehlererkennungsanordnungen werden alle transienten Fehler, permanenten Fehler und auch Laufzeitfehler erkannt. Laufzeitfehler innerhalb einer ALU-Einheit 1, 2 werden erkannt, wenn das Ergebnis nicht oder zu spät zu der entsprechenden Vergleichseinheit und/oder in die entsprechenden Ergebnisregister gelangt und somit ein Vergleich mit einem Teilergebnis erfolgt. Durch die Absicherung der Operandenregister und Zwischenregister 8, 9, 10, 11 mit Fehlererkennungs- und Fehlerkorrekturcode und dem Vergleich der Endergebnisse ist der jeweilige Fehlerort und Fehlerzeitpunkt genau zu lokalisieren. Somit kann auf eine transiente Störung sehr schnell reagiert werden.

Es ergeben sich somit die folgenden Möglichkeiten zur Fehlerlokalisierung:

Ergibt ein Vergleich der Ergebnisdaten in der Vergleichseinheit 14C oder 24C einen Unterschied, dann kann auf einen Fehler innerhalb der ALU-Einheiten 1, 2 geschlossen werden.

Ergibt ein Vergleich der ECC-Codierung in einer der Vergleichseinheiten 5C, 6C einen Unterschied, dann kann auf ein fehlerhaftes Signal von dem Bus 3 bzw. vorgeschalteten Komponenten geschlossen werden.

Ergibt ein Vergleich der ECC-Codierung in der Vergleichseinheit 24C einen Unterschied, dann kann auf eine fehlerhafte Codierung des Ergebnisses geschlossen werden.

Zur Umschaltung zwischen dem genannten Sicherheitsmodus SM, in dem eine redundante Abarbeitung und Prüfung erfolgt und dem Leistungsmodus LM, bei dem eine Leistungssteigerung durch separate Programmabarbeitung erreicht wird, dient ein Steuerwerk 17, welches insbesondere die Funktion einer Umschalteinrichtung ausübt. Durch diese Umschalteinrichtung 17 werden wenigstens die Elemente 8, 9 und 1, 2 so geschaltet, dass im einen Fall, also im Sicherheitsmodus SM eine redundante Programmabarbeitung, insbesondere eine synchrone Programmabarbeitung erfolgt und im zweiten Betriebsmodus, dem Leistungsmodus LM eine parallele Abarbeitung unterschiedlicher Programme bzw. Operanden vollzogen werden kann. Dazu können optional Schalter oder Schaltmittel vorgesehen sein, die zum Einen in den Elementen 8, 9 respektive 1, 2 oder auch in der Umschalteinrichtung bzw. Steuerwerk 17 lokalisiert sein können oder zusätzlich separat zu den Elementen 8, 9, 1, 2 bzw. 17 in der Schaltung enthalten sind.

Zur Umschaltung erfolgt z.B. eine Kennzeichnung der Programme oder Aufgabenprogramme oder Programmteile, also Codeblöcke oder auch der Befehle oder der Operanden selbst durch eine Kennung, durch welche erkennbar ist, ob diese sicherheitsrelevant sind, also im Sicherheitsmodus SM abgearbeitet werden müssen oder dem Leistungsmodus LM zugänglich gemacht werden können. Dies kann durch wenigstens ein Bit erfolgen, oder es kann auch durch einen speziellen Befehl die darauffolgende Sequenz gekennzeichnet werden. Ebenso kann eine Umschaltung dadurch erfolgen, dass auf eine bestimmte, vorgebbare Speicheradresse zugegriffen wird, durch welche dann der Leistungsmodus LM oder der Sicherheitsmodus SM ausgelöst wird.

Dabei können die Programme zum Einen Anwendungsfunktionen umfassen, also insbesondere z.B. zur Steuerung von Betriebsabläufen bei einem Fahrzeug vorhanden sein, oder aber die Umschaltung erfolgt bezüglich Programmen, bei denen die Kennzeichnung auf Betriebssystemebene erfolgt, also z. B. eine Zuordnung ganzer Betriebssystemtasks.

Bei einer Decodierung kann nun das Steuerwerk 17 als Umschalteinrichtung erkennen, ob die nun folgende Berechnung sicherheitsrelevant ist, also im Sicherheitsmodus SM ausgeführt werden soll oder nicht. Ist dies der Fall, so werden die Daten an beide Ausführungseinheiten 1 und 2 übergeben. Ist dies nicht der Fall, wird also im Leistungsmodus LM weitergearbeitet, so bekommt eine Ausführungseinheit die Daten bereitgestellt und gleichzeitig kann die nächste Anweisung, wenn diese ebenfalls nicht sicherheitsrelevant ist, an die zweite Ausführungseinheit gegeben werden, so dass die Programme bzw. Operanden parallel mit höherem Durchsatz abgearbeitet werden.

Im ersten Fall (SM) beispielsweise dauert die Berechnung des Ergebnisses bei synchroner Abarbeitung auf beiden Einheiten gleich lang. Die Ergebnisse stehen also im Sicherheitsmodus bei synchroner Abarbeitung gleichzeitig bereit. Diese Daten werden nun am Ausgang entsprechend 12 und 13 wieder mit einer Codierung versehen, und es werden die Daten und/oder die Codierung dieser Daten, wie in den Figuren 1 und 2 beschrieben, bei ResultA und ResultB verglichen. Stimmen sie überein, so werden die Daten freigegeben; ansonsten erfolgt eine der angesprochenen Fehlerreaktionen. Im zweiten Fall, also im Leistungsmodus LM, wenn die Daten parallel abgearbeitet werden, wird der Komparator oder Vergleicher 14C bzw. 24C am Ausgang der beiden Rechenwerke nicht angesteuert und die Ergebnisse ResultA und ResultB werden nacheinander wieder in die Registerbank zurückgeschrieben und können auch nacheinander ausgegeben werden, wie es auch in einem superskalaren Prozessor der Fall ist.

Da im Sicherheitsmodus SM parallel, also redundant, die gleichen Programme abgearbeitet werden, erfolgt hier eine Umschaltung nur, wenn für beide Zweige im Leistungsmodus LM, also Register 8 und ALU 1 sowie Register 9 und ALU 2 eine Umschaltung z.B. aufgrund der Kennung vorgesehen ist. Erfolgt eine vollsynchrone Abarbeitung, also eine zeitgleiche Abarbeitung des Programms, ist dies ohnehin gegeben, erfolgt eine nichtsynchrone oder asynchrone Abarbeitung des Programms, muss von der schnelleren Ausführungseinheit auf die zurückliegende gewartet werden, so dass das Steuerwerk 17 erst dann umschaltet, wenn beide Kennungen vorliegen bzw. ausgewertet sind. Eine solche Synchronität muss auch zum Ergebnisvergleich bzw. ECC- und Ergebnisvergleich gemäß der Blöcke 12, 13 und 14C, 24C sowie 12A und 13A entweder durch Zeitgleichheit erzwungen oder durch Warten erzeugt werden.

Figur 3 zeigt in einem weiteren erfindungsgemäßen Beispiel eine Schaltungsanordnung mit zwei Ausführungseinheiten die diesmal als Komponenten K1 und K2 mit 300 und 301 bezeichnet sind. Diese beiden Komponenten stellen nun beispielsweise vollständige Rechnerkerne so genannte Cores oder auch CPUs dar im Gegensatz zu den vorher in Figur 1 und Figur 2 verwendeten Rechenwerken (ALUs). Die beiden Komponenten K1 und K 2 weisen ebenfalls zwei Eingänge und einen Ausgang auf. Auch hier können die zur Ausführung vorgesehenen Operanden direkt vom Bus 3 in die Eingänge der Komponenten eingekoppelt werden oder vorher in die dafür vorgesehenen Operandenregister 8 und 9 abgelegt werden. Die weiteren Ausführungen zu den Operandenregistern 8 und 9 sowie entsprechender ECC-Codierung sind mit denen der Figuren 1 und 2 vergleichbar und auch hier gültig. Gleiches gilt im Prinzip auch für die nachgeschalteten Datenregister mit optionalem ECC-Anteil die hier in Figur 3 mit 110, 111, 210, 211 bezeichnet sind, sowie die entsprechende ECC Codierung in 110A, 111A, 210A, 211A. Allerdings sind hier im Vergleich zu Figur 1 und 2 als weitere Ausführungsform jeweils zwei Paare von Zwischenregistern den jeweiligen Komponenten vorgeschaltet. Wie bereits zu Figur 1 und 2 beschrieben werden Fehler bei der Operandenzuführung also bei den Dateneingabewerten durch Prüfsummenbildung (ECC) überwacht. Zur Fehlererkennung sind hier ebenfalls wie bei den Figuren 1 und 2 Vergleichseinheiten oder Comperatoren 15C, 16C, 25C und 26C entsprechend der Anzahl der zu vergleichenden Register als Vergleichsmittel vorgesehen. Ergibt sich somit ein Unterschied in der ECC-Codierung bzw. bei den Operanden, dann wird dies als Fehler interpretiert und es kann ein Fehlersignal ausgegeben werden, der Fehler abgespeichert werden, der Fehler angezeigt werden, eine vom Fehler abhängige Fehlerreaktion eingeleitet werden, insbesondere die Aufnahme eines Notbetriebes oder eine Fehlerkorrektur. Auch hier kann wie bei den Figuren 1 und 2 bei Auftritt eines Fehlers eine Berechnungswiederholung im nächsten Taktzyklus erfolgen, wobei auch hier ein Schattenregister Verwendung finden kann.

Die Ergebnisse oder Zustände der Operandenverarbeitung ResultA oder ResultB werden dann wie in Figur 2 verglichen (optional sind wieder die ECC Codes) und auf Fehler überprüft. Wie Figur 2 werden dazu die Register 12 und 13 mit den ECC Anteilen 12A und 13A sowie als Vergleichsmittel der Vergleicher bzw. Comparator 24C eingesetzt. Im Gegensatz zu Figur 2 sind hier zwei Ergebnisfreigabeblöcke 15A und 15B eingesetzt über welche mittels Freigabesignal 16 die Ergebnisfreigabe auf den Bus 4 erfolgt.

In dieser Figur 3 in der erfindungsgemäße Elemente der Prozesseinheit 102 dargestellt sind wird nun die Funktion des Steuerwerks hier mit 302 bezeichnet näher beleuchtet. Dabei sind aus Gründen der Übersichtlichkeit die Ausgänge, dargestellt durch die Pfeile bei dem Steuerwerk 302, nicht im Einzelnen dargestellt, da durch diese die ersten Schaltmittel 308 bis 315, die Ansteuerschaltung 37 bzw. die darin enthaltenen Elemente sowie optional die Operandenregister 8 und 9 sowie ebenfalls optional die Zwischenregister 110, 111 und 210, 211 angesteuert werden.

Auch hier hat das Steuerwerk 302 in gewissem Sinne eine Umschaltfunktion um von einem Betriebsmodus in einen anderen Betriebsmodus zu wechseln. Das heißt es wird insbesondere aus dem Sicherheitsmodus SM in den Leistungsmodus LM und umgekehrt gewechselt, was beispielsweise durch Verwendung vorgebbarer Steuersignale entsprechend dem jeweiligen Betriebsmodus geschieht.

Abhängig von einer Umschaltbedingung wie bereits bei den Figuren 1 und 2 ausgeführt, werden somit je nach erkanntem Betriebsmodus die oben genannten Elemente entsprechend angesteuert. Dabei enthält die Ansteuerschaltung 37 einen Decoder 303, ein zweites Schaltmittel 304, optional zwei Register oder Latches 307 und 306. Auch hier kann wiederum aus Sicherheitsgründen ein Vergleich der ECC Codierungen aus dem Decoder zugeordneten Bereich 303 A und dem Register 306 zugeordneten Bereich 306 A mittels Vergleicher 305C erfolgen. Diese Ansteuerschaltung 37 oder auch Teile daraus können auch in dem Steuerwerk 302 untergebracht bzw. mit diesem identisch sein.

Bei Verwendung einer Kennzeichnung oder Kennung oder auch einer vorgebbaren Speicheradresse als Umschaltbedingung wie zu Figur 1 und 2 ausgeführt kann nun bei einer Dekodierung das Steuerwerk erkennen ob die nun folgende Berechnung sicherheitsrelevant ist oder nicht. Ist dies der Fall, erfolgt also die Verarbeitung der Operanden im Sicherheitsmodus SM, so werden die gleichen Operanden, also hier entsprechend Operand 1 und Operand 2, an beide Ausführungseinheiten 300 und 301 übergeben. Dabei werden beide Ausführungseinheiten mit den gleichen Steuersignalen zur Verarbeitung der Operanden angesteuert. Die Zuführung der Operanden zu den Ausführungseinheiten und der Takt der Ausführungseinheiten zur Verarbeitung der Operanden sind dabei aufeinander abgestimmt. In einer bevorzugten Ausführungsform arbeiten die Zuführungseinheiten (also wenigstens die Operanden-Register 8 und 9) und die Ausführungseinheiten sowie der Decoder 303 jeweils mit der gleichen Taktfrequenz, also dem gleichen Takt. Insbesondere arbeiten beide Seiten also die Zuführungseinheit mit Operanden-Register 8 und die Ausführungseinheit 300 mit dem gleichen Takt und ebenso die Zuführungseinheit mit Operandenregister 9 mit Ausführungseinheit 301 mit dem gleichen Takt. In einer bevorzugten Ausführungsform sind beide Seiten synchron, sodass die Operanden im Sicherheitsmodus SM synchron verarbeitet werden, sodass das Ergebnis bzw. ein entsprechender Verarbeitungszustand ResultA bzw. ResultB beider Seiten in den Registern 12 bzw. 13 gleichzeitig vorliegt.

Die entsprechende Zuführungseinheit enthält somit wenigstens das entsprechende Operanden-Register 8 oder 9. Weiterhin ist in der Zuführungseinheit je nach Ausführungsform wenigstens ein Zwischenregister 10 oder 11 in Figur 1 oder 2, bzw. 110, 111 oder 210, 211 in Figur 3 möglich. Ebenfalls in der Zuführungseinheit enthalten können erste Schaltmittel sein, um entsprechend der Taktfrequenz die Operanden durchzuschalten. Diese ersten Schaltmittel 308, 310, 312, 314 können entweder separat wie in Figur 3 dargestellt vorhanden sein oder in wenigstens eines der entsprechenden Register (Operanden Register 8 oder 9, entsprechendes Zwischenregister 10 oder 11, 110, 111, 210, 211) integriert sein. Abhängig davon ob eine ECC Codierung Einsatz findet sind die jeweiligen Registerabschnitte (10A, 11A bei Figur 1 und 2 oder 110A, 111A, 210A, 211A bei Figur 3) sowie die zugehörigen Comparatoren (5C,6C in Figur 1 und 2 sowie 15C,16C,25C,26C in Figur 3) optional Teil der jeweiligen Zuführungseinheit. Bezüglich der ersten Schaltmittel im Rahmen der ECC Codierung (309, 311, 313, 315 in Figur 3) gilt das gleiche, das heißt auch diese sind optional Teil der jeweiligen Zuführungseinheit und können ebenfalls separat oder in wenigstens eines der entsprechenden Register (ECC Operanden Register 8A oder 9A bzw. entsprechendes Zwischenregister 10A oder 11A, 110A, 111A, 210A, 211A) integriert sein. Die einzelnen Zuführungseinheiten entsprechen somit den jeweiligen Elementen im entsprechenden Zuführungspfad zu den Ausführungseinheiten, wobei eine Aufteilung wie in den Figuren 1, 2, 3 oder 5 verwendet werden kann oder auch alles bzw. Teile in einem Bauteil zusammengefasst werden können.

Liegen die Ergebnisse oder Zustände der Operandenverarbeitung im Sicherheitsmodus, also dem ersten Betriebsmodus gleichzeitig vor werden diese nun am Ausgang der jeweiligen Ausführungseinheit in entsprechenden Registern 12 mit 12A und 13 mit 13A wieder mit einer Codierung (ECC) versehen und es werden die Ergebnisse bzw. Verarbeitungszustände ResultA, ResultB und/oder die Kodierungen (ECC) dieser Ergebnisse verglichen. Dazu dient der Vergleicher oder Comparator 24C. Stimmen diese überein, so werden die Daten wieder mit Freigabesignal 16 freigegeben und durch die Einheiten 15A und/oder 15B auf den Bus 4 geschrieben. Das Freigabesignal wird bevorzugt vom Vergleicher erzeugt, kann aber auch vom Steuerwerk erzeugt werden. Im Sicherheitsmodus SM sind die Ergebnisse bei Freigabe gleich, sodass diese einmal auf den Bus 4 geschrieben werden. Bei Ungleichheit werden die Ergebnisse nicht freigegeben und nicht auf den Bus sondern beispielsweise in ein Fehlerregister geschrieben oder ein Flag bzw. ein Fehlersignal erzeugt, um eine Anzeige oder entsprechende Fehlerreaktion einzuleiten. Insbesondere ist hier die Verwendung eines Schattenregisters zur Zurückschreibung wie bereits bei den Operandenregistern in den Figuren 1,2 und 3 beschrieben möglich. In einem speziellen Fall können die Operanden in Sicherheitsmodus SM auch zuerst einer Ausführungseinheit zugeführt werden, anschließend der Fehlererkennungscode ECC überprüft werden und dann der zweiten Ausführungseinheit zugeführt werden, was alles im selben Taktabschnitt als Volltakt erfolgt.

Wird entsprechend der Umschaltbedingung erkannt, dass eine Verarbeitung der Operanden im zweiten Betriebsmodus dem Leistungsmodus LM erfolgt so bekommt nur eine Ausführungseinheit den oder die entsprechenden Operanden bereitgestellt wobei quasi gleichzeitig (im gleichen Volltakt), also im nächsten Halbtakt Abschnitt, der oder die nächsten Operanden (sofern ebenfalls nicht sicherheitsrelevant zu verarbeiten) an die zweite Ausführungseinheit gegeben werden. Dabei arbeiten die Zuführungseinheiten mit einer schnelleren, insbesondere der doppelten Taktfrequenz wie die beiden Ausführungseinheiten, also im so genannten Halbtakt. Bei dieser nicht sicherheitskritischen Operandenverarbeitung erfolgt kein Ergebnisvergleich und die jeweiligen Ergebnisse oder Zustände werden entsprechend, insbesondere abwechselnd auf den Bus 4 geschrieben. In diesem Fall ist keine Freigabe nötig. Insbesondere in diesem zweiten Betriebsmodus dem Leistungsmodus LM ist es denkbar, dass die beiden Seiten, insbesondere die Ausführungseinheiten nicht synchronisiert sind also asynchron arbeiten. Kollisionen beim Schreiben auf den Bus können durch Zeitbedingungen wie Zeitschlitze, Ereignissteuerung oder durch Arbitrierung verhindert werden.

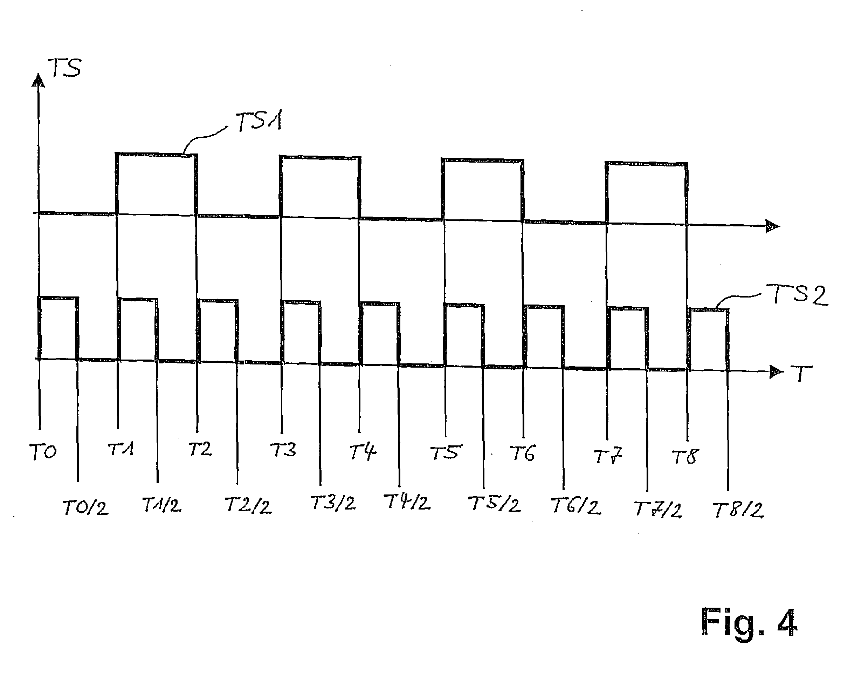

Figur 4 zeigt mit TS 1 die Volltakt Darstellung und mit TS 2 die Darstellung des Halbtaktes. Im Sicherheitsmodus SM werden somit in jedem Volltakt TS 1 die Operanden redundant beiden Ausführungseinheiten zugeführt und insbesondere im gleichen Volltakt in diesen verarbeitet. Bei voll synchroner Abarbeitung der Operanden können dann die Ergebnisse direkt verglichen werden, ansonsten muss ein Synchronisierung spätestens zum Ergebnisvergleich erfolgen. Im Leistungsmodus LM dem zweiten Betriebsmodus arbeitet die Zuführungseinheit im Halbtakt, sodass beispielsweise bei T1 der oder die ersten Operanden der einen Ausführungseinheit und bei die T1/2 der oder die nächsten Operanden der anderen Ausführungseinheit zugeführt werden, sodass die ersten und nächsten Operanden in einem Volltakt Zyklus in den Ausführungseinheiten verarbeitet werden. So arbeiten im Leistungsmodus LM die jeweiligen Zuführungseinheiten also insbesondere Operandenregister 8 und 9 mit einer schnelleren Taktung als die Ausführungseinheiten, insbesondere doppelt so schnell. Auch der Decoder 303 zur Beaufschlagung des zweiten Schaltmittels 304, welches die Ausführungseinheiten mit den entsprechenden Steuersignalen beaufschlagt, arbeitet ebenfalls mit dieser schnelleren Taktung, insbesondere doppelt so schnell.

Das erfindungsgemäße Prinzip kann für Ausführungseinheiten mit wenigstens zwei Operandeneingängen wie in den Figuren 1, 2 und 3 dargestellt Anwendung finden, also bei Ausführungseinheiten, welche mehrere Operanden verarbeiten bzw. benötigen, aber ebenso für Ausführungseinheiten die nur einen Operandeneingang aufweisen wie in Figur 5 dargestellt.

Figur 5 zeigt im wesentlichen die gleichen Elemente wie schon bei Figur 3 beschrieben, mit dem Unterschied, dass die Ausführungseinheiten 500 und 501 nur einen Operandeneingang aufweisen. Entsprechend ist nur ein Operanden-Register 8 vorgesehen sowie entsprechend die Zwischenregister 110 und 210. Gleiches gilt für die zugehörigen Elemente bezüglich des Fehlererkennungscodes ECC, die Elemente 110A, 210A mit den entsprechenden Comparatoren 15C und 25C. Die ersten Schaltmittel 508 und 510 entsprechen den Schaltmitteln 308 und 310 in Figur 3 und die ersten Schaltmittel 509 und 511 den Schaltmitteln 309 und 311. Auch hier gilt die ECC Elemente sind optional. Auch hier können die ersten Schaltmittel separat oder im entsprechenden Register enthalten sein. Hier werden die Operanden seriell angeliefert und im Leistungsmodus LM dem zweiten Betriebsmodus im Halbtakt abwechselnd den Ausführungseinheiten zugeführt. Im Sicherheitsmodus SM werden die Operanden im Volltakt den Ausführungseinheiten zugeführt, sodass jeweils derselbe Operand zugeführt wird und in den Ausführungseinheiten redundant verarbeitet wird. Im Rahmen dieser Funktionalität entspricht die Ansteuerschaltung 57 der Ansteuerschaltung 37 aus Figur 3 lediglich bezogen auf das Ein-Operandenprinzip. Ebenso entspricht das Steuerwerk 502 dem Steuerwerk 302 aus Figur 3 wiederum bezogen auf das Ein-Operandenprinzip und die damit einhergehenden Anpassungen.

Am Ausgang werden die Ergebnisse und/oder Zustände im Sicherheitsmodus SM miteinander verglichen (optional auch ECC, nur wenn Fehlererkennungskodierungseinheit auch getestet werden soll) wie bei Figur 3 beschrieben. Von diesem Ergebnis wird bevorzugt erst nach dem Ergebnisvergleich der Fehlererkennungscode ECC gebildet, sodass sichergestellt ist, dass die Kodierungen von einem korrekten Ergebnis gebildet wurden. Im Leistungsmodus LM werden die Ergebnisse der Ausführungseinheiten nacheinander auf den Bus gelegt in der Reihenfolge, wie die Operanden den Ausführungseinheiten zugeführt wurden. Die Durchgängigkeit des Konzeptes kann dahingehend optimiert werden in dem alle dargestellten ECC Kodierungen gebildet und geprüft werden und auch auf den Bus gelegt werden, wobei verschiedene Stufen dieser Durchgängigkeit bzw. Sicherheitsrelevanz möglich sind.

Alle aufgeführten Ausführungsbeispiele sind im Prinzip erfindungsgemäß vergleichbar und dementsprechend beliebig kombinierbar und verbindbar. Weitere Ausführungsformen im Rahmen der erfindungsgemäßen Prinzipien sind möglich, sodass diese konkreten Ausführungsformen diesbezüglich nicht als einschränkend aufgefasst werden dürfen. Das heißt auch, dass das zum einzelnen Ausführungsbeispiel gesagte im allgemeinen auch für die anderen Ausführungsbeispiele im Rahmen des erfindungsgemäßen Prinzips gültig und anwendbar ist.

## Patentansprüche

1. Verfahren zur Operandenverarbeitung in einer Prozessoreinheit mit wenigstens zwei Ausführungseinheiten, welche in einem vorgebbaren Takt betreibbar sind, wobei die Ausführungseinheiten mit Steuersignalen zur Verarbeitung der Operanden angesteuert werden und zwischen einem ersten Betriebsmodus und einem zweiten Betriebsmodus umgeschaltet werden kann, **dadurch gekennzeichnet, dass** in dem ersten Betriebsmodus beiden Ausführungseinheiten gleiche Operanden zugeführt werden und in dem zweiten Betriebsmodus beiden Ausführungseinheiten unterschiedliche Operanden zugeführt werden und in dem ersten Betriebsmodus beide Ausführungseinheiten mit gleichen Steuersignalen zur Verarbeitung der Operanden angesteuert werden und im zweiten Betriebsmodus beide Ausführungseinheiten mit unterschiedlichen Steuersignalen zur Verarbeitung der Operanden angesteuert werden, dass die Operanden oder aus den Operanden abgeleitete Daten, wie zum Beispiel daraus gebildete ECC Codes auf Übereinstimmung durch Vergleicher bzw. Comparatoren verglichen werden und/oder dass bei der Verarbeitung der Operanden entstehende Zustände, wie zum Beispiel abgeleitete Daten in Form von ECC Codes, oder Ergebnisse durch Vergleicher auf Übereinstimmung verglichen werden und dass bei dem Vergleich festgelegt wird, welche Operanden, Daten, Zustände oder Ergebnisse verglichen werden.

2. Verfahren nach Anspruch 1, **dadurch gekennzeichnet, dass** die Ausführungseinheiten (1, 2) Ergebnisdaten und/oder deren ECC-Codierung bereitgestellten, dass die Ergebnisdaten und/oder deren Codierung in einer Vergleichseinheit (14C, 24C) miteinander verglichen werden, dass im Falle des Nichtvorhandenseins eines Fehlers ein Freigabesignal (16) erzeugt wird, dass dieses Freigabesignal (16) in eine Freigabeeinrichtung (15) eingekoppelt wird, welche dazu veranlasst wird, die Ergebnisdaten auf einen Bus (4) zu schreiben.

3. Verfahren nach Anspruch 1, **dadurch gekennzeichnet, dass** im zweiten Betriebsmodus, wenn den beiden Ausführungseinheiten unterschiedliche Operanden zugeführt werden, der Komparator oder Vergleicher (14C, 24C) am Ausgang der beiden Ausführungseinheiten nicht angesteuert wird.

4. Verfahren nach Anspruch 1, **dadurch gekennzeichnet, dass** eine Umschaltung vom zweiten in den ersten Betriebsmodus durch eine Steuerwerk (17) aufgrund von Kennungen der ersten und zweiten Ausführungseinheit (1, 2) erfolgt, dass wenn die beiden Ausführungseinheiten (1, 2) nichtsynchron oder asynchron zueinander arbeiten die schnellere Ausführungseinheit (1, 2) auf die zurückliegende Ausführungseinheit (1, 2) wartet, so dass das Steuerwerk (17) erst dann umschaltet, wenn beide Kennungen vorliegen bzw. ausgewertet sind.

5. Verfahren nach Anspruch 1, **dadurch gekennzeichnet, dass** bei einem Vergleich der Ergebnisse bei voll synchroner Abarbeitung der Operanden durch die beiden Ausführungseinheiten (1, 2) die Ergebnisse direkt verglichen werden, ansonsten ein Synchronisierung spätestens zum Ergebnisvergleich erfolgt.

6. Vorrichtung zur Operandenverarbeitung in einer Prozessoreinheit mit wenigstens zwei Ausführungseinheiten, welche in einem vorgebbaren Takt betreibbar sind, wobei ein Steuerwerk enthalten ist, welches die Ausführungseinheiten mit Steuersignalen zur Verarbeitung der Operanden ansteuert und welches zwischen einem ersten Betriebsmodus und einem zweiten Betriebsmodus umschaltet, **dadurch gekennzeichnet, dass** das Steuerwerk mit den Ausführungseinheiten und weiteren Zuführungseinheiten verbunden ist und das Steuerwerk mit den Zuführungseinheiten derart zusammen wirkt, dass in dem ersten Betriebsmodus beiden Ausführungseinheiten gleiche Operanden zugeführt werden und in dem zweiten Betriebsmodus beiden Ausführungseinheiten unterschiedliche Operanden zugeführt werden, wobei das Steuerwerk derart ausgebildet ist, dass in dem ersten Betriebsmodus beide Ausführungseinheiten mit gleichen Steuersignalen zur Verarbeitung der Operanden angesteuert werden und im zweiten Betriebsmodus beide Ausführungseinheiten mit unterschiedlichen Steuersignalen zur Verarbeitung der Operanden angesteuert werden, dass die Operanden oder aus den Operanden abgeleitete Daten, wie zum Beispiel daraus gebildete ECC Codes auf Übereinstimmung durch Vergleicher bzw. Comparatoren verglichen werden und/oder dass bei der Verarbeitung der Operanden entstehende Zustände, wie zum Beispiel abgeleitete Daten in Form von ECC Codes, oder Ergebnisse durch Vergleicher auf Übereinstimmung verglichen werden und dass bei dem Vergleich festgelegt wird, welche Operanden, Daten, Zustände oder Ergebnisse verglichen werden.

7. Vorrichtung nach Anspruch 6, **dadurch gekennzeichnet, dass** die Ausführungseinheiten (1, 2) Ergebnisdaten und/oder deren ECC-Codierung bereitgestellten, dass die Ergebnisdaten und/oder deren Codierung in einer Vergleichseinheit (14C, 24C) miteinander verglichen werden, dass im Falle des Nichtvorhandenseins eines Fehlers ein Freigabesignal (16) erzeugt wird, dass dieses Freigabesignal (16) in eine Freigabeeinrichtung (15) eingekoppelt wird, welche dazu veranlasst wird, die Ergebnisdaten auf einen Bus (4) zu schreiben.

8. Vorrichtung nach Anspruch 6, **dadurch gekennzeichnet, dass** im zweiten Betriebsmodus, wenn den beiden Ausführungseinheiten unterschiedliche Operanden zugeführt werden, der Komparator oder Vergleicher (14C, 24C) am Ausgang der beiden Ausführungseinheiten nicht angesteuert wird.

9. Vorrichtung nach Anspruch 6, **dadurch gekennzeichnet, dass** eine Umschaltung vom zweiten in den ersten Betriebsmodus durch eine Steuerwerk (17) aufgrund von Kennungen der ersten und zweiten Ausführungseinheit (1, 2) erfolgt, dass wenn die beiden Ausführungseinheiten (1, 2) nichtsynchron oder asynchron zueinander arbeiten die schnellere Ausführungseinheit (1, 2) auf die zurückliegende Ausführungseinheit (1, 2) wartet, so dass das Steuerwerk (17) erst dann umschaltet, wenn beide Kennungen vorliegen bzw. ausgewertet sind.

10. Vorrichtung nach Anspruch 6, **dadurch gekennzeichnet, dass** bei einem Vergleich der Ergebnisse bei voll synchroner Abarbeitung der Operanden durch die beiden Ausführungseinheiten (1, 2) die Ergebnisse direkt verglichen werden, ansonsten ein Synchronisierung spätestens zum Ergebnisvergleich erfolgt.
